# EUROPÄISCHE PATENTSCHRIFT

(11) **EP 2 147 765 B1**
(45) Veröffentlichungstag und Bekanntmachung des Hinweises auf die Patenterteilung: **27.12.2017**
(21) Anmeldenummer: 09008595.2
(22) Anmeldetag: 01.07.2009
(51) Int. Cl.: B29C 39/12, B32B 27/36

(54) **Verfahren zur Herstellung von gebogenen Kunststoff-Verbundscheiben für insbesondere die Fahrzeugverscheibung**
Method for the manufacture of curved laminated plastic glazings in particular for vehicle windows
Procédé pour la fabrication de vitrages feuilletés courbés en plastique pour, notamment, le vitrage de véhicules

(30) Priorität: 22.07.2008 DE 102008034041
(43) Veröffentlichungstag der Anmeldung: 27.01.2010
(73) Patentinhaber: KRD Sicherheitstechnik GmbH, 21502 Geesthacht (DE)
(72) Erfinder: Lüdemann, Nils, 23627 Groß Gronau (DE); Prinz, Raimund, 21635 Jork (DE)
(74) Vertreter: Emmel, Thomas

(56) Entgegenhaltungen:
- EP-A- 1 577 084
- WO-A-2006/060129
- DE-A1-102006 049 621
- GB-A- 1 384 542
- US-A- 3 703 425
- US-A- 4 045 269
- US-A- 4 666 758
- US-A- 5 229 204
- US-A1- 2002 110 693

## Beschreibung

Die Erfindung bezieht sich auf ein Verfahren zur Herstellung von gebogenen Kunststoff-Verbundscheiben gemäss Anspruch 1.

Im Stand der Technik sind unterschiedliche Kunststoff-Verbundscheiben bekannt. Abhängig vom Einsatzzweck bestehen sie aus mindestens zwei in der Regel flächig miteinander verbundenen Kunststoffscheiben. Es kann sich um Scheiben aus dem gleichen aber auch um Scheiben aus unterschiedlichem Kunststoff handeln.

Eine aus der DE 102004014023 bekannte Kunststoff-Verbundscheibe für die Fahrzeugverscheibung besteht z.B. aus einer äußeren Scheibe aus Polymethylmethacrylat (PMMA) und einer inneren Scheibe aus Polycarbonat, die über eine thermoplastische Polyurethanfolie (TPU-Folie) miteinander verbunden sind. Die PMMA-Scheibe ist dabei in der Regel außen und die Polycarbonat-Scheibe zum Inneren des Fahrzeuges weisend vorgesehen. Durch die PMMA-Scheibe ist eine hohe Abriebs-/ und Abriebfestigkeit gegeben. Die Polycarbonat-Scheibe ist dagegen splitterfest und pulverisiert nicht. Sollte es zum Bruch der Verbundscheibe kommen, dann ist ein weiterer Vorteil, dass die Bruchstücke, wie bei einer üblichen Verbund-Sicherheits-Glasscheibe (VGS), durch die TPU-Folie zusammen gehalten werden.

Weitere, insbesondere im Sicherheitsbereich, z.B. bei Polizeifahrzeugen bekannte Verbundscheiben, bestehen aus zwei Polycarbonat-Scheiben, die über eine TPU-Folie miteinander verbunden sind. Polycarbonat weist eine hohe Schlagzähigkeit auf. Beim Auftreffen eines Gegenstandes wird nur ein geringer Teil durch plastische Verformung des Polycarbonates abgebaut. Ein weitaus größerer Teil der Energie führt zu einer elastischen Verformung des Materials. Polycarbonat-Scheiben sind daher insbesondere für Sicherheitsfahrzeuge geeignet. Im allgemeinen Kfz-Bereich sind sie dagegen nicht geeignet, da sie abriebempfindlich sind und aufgrund ihrer hohen Elastizität bei Personenkollisionen schwerere Verletzungen verursachen können, als dies bei üblichen Verbund-Sicherheits-Scheiben aus Silikatglas der Fall ist.

Üblicherweise werden Kunststoff-Verbundscheiben wie folgt hergestellt: Zunächst werden z.B. Polycarbonat und/oder PMMA-Scheibenzuschnitte hergestellt. Die Scheibenzuschnitte werden einzeln in Zwangsformen bei einer Temperatur zwischen 120°C und 150°C im Ofen auf die gewünschte Form gebracht. Anschließend an die Formung werden die Scheiben gegebenenfalls mit Beschichtungen versehen, die die Abriebfestigkeit, beziehungsweise die Witterungs- oder UV-Beständigkeit erhöhen. Dann wird ein Verbund aus den beiden Scheiben mit einer dazwischen liegenden TPU-Folie gefügt. Der Verbund wird dann unter Vakuum, Druck und Temperatur in einem Autoklaven mehrere Stunden zu einem homogenen System verbunden. Nach Abkühlung kann die Scheibe dann entsprechend an das gewünschte Einbaumaß angepasst und in z.B. ein Fahrzeug eingebaut werden. Geringfügige Verformungen, z.B. bei Seitenscheiben, können auch im Autoklav zwischen zwei Formen hergestellt werden.

Nachteilig ist, dass der Herstellungsprozess bekannter Kunststoff-Verbundscheiben im Autoklaven aufwendig ist und insbesondere viel Energie verbraucht.

Aus der GB 1 385 542 A ist es bekannt, zwei Kunststoffscheiben über eine zwischen ihnen vergossene und dann ausgehärtete Gießharzschicht auf Basis eines duroplastischen Elastomers miteinander zu verbinden. Es wird erwähnt, dass sich auf diese Weise in einfacher Weise Verbundscheiben mit komplexer Formgebung herstellen lassen, wobei es um die Verbindung bereits vorgeformter Scheiben geht.

Die US 5,229,204 A beschreibt eine Verbundscheibe, die eine äußere Acrylat-Scheibe und eine innere Polycarbonat-Scheibe aufweist. Verbunden sind die beiden über einen transparenten Kleber. Es werden gekrümmte Scheiben als vorgeformte Ausgangsmaterialien miteinander verklebt. Gleiches gilt für die US 3,703,425 A, in der Polyurethan-Zwischenschichten zwischen bereits geformte Glas- oder Kunststoffscheiben eingebracht werden.

Bei der DE 10 2006 049 621 A1 dient eine TPU-Folie zur Verbindung von zwei Scheiben und dieser Verbund wird anschließend verformt.

Ausgehend von dem bekannten Stand der Technik ist es Aufgabe der Erfindung, ein Verfahren zur Herstellung einer Kunststoff-Verbundscheibe mit gesteigerter Qualitäts- und Produktionssicherheit zu schaffen, das eine Herstellung mit geringerem Energie- und Kostenaufwand erlaubt.

Gelöst wird diese Aufgabe mit einem Verfahren zur Herstellung einer gebogenen Kunststoff-Verbundscheibe, gemäß Anspruch 1.

Wie aus dem Stand der Technik bekannt, so weist auch die nach dem erfindungsgemäßen Verfahren hergestellte Kunststoff-Verbundscheibe mindestens zwei über eine Polyurethan-Schicht flächig miteinander verbundene Kunststoffscheiben auf.

Im Unterschied zum Stand der Technik ist die Polyurethan-Schicht bei der erfindungsgemäß hergestellten Kunststoff-Verbundscheibe keine TPU-Folie sondern eine aus einem 2-Komponenten-Gießharz mittels Polymerisation gebildete Gießharzschicht.

Bei den Komponenten des eingesetzten Gießharzes handelt es sich um einen Harz auf Basis eines Polyols und einen Härter auf Basis eines Präpolymers mit Isocyanat-gruppen. Bringt man die beiden Komponenten miteinander in Kontakt, so entsteht im Zuge einer Polymerisation ein Polyurethan.

Im Rahmen der erfindungsgemäßen Herstellung von Kunststoff-Verbundscheiben können die üblichen bei der Polyurethan-Herstellung eingesetzten Polyole verwendet werden. Besonders geeignet sind z.B. Polyetherpolyol oder Polyesterpolyol.

Denkbare Isocyanate sind z.B. Dimethylmethan-Diisocyanat (MDI) oder Toluylen-Diisocynat (TDI). Die Verwendung dieser Isocyanate führt zu aromatischen Polyurethanen.

Aliphatische Polyurethane erhält man bei Verwendung von Isocyanaten, wie Hexamethylen-Diisocyanat (HDI) oder Isophoron-Diisocyanat (IPDI). Die mechanischen Eigenschaften der aliphatischen Polyurethane sind etwas schlechter als die der aromatischen Polyurethane. Dagegen zeigen aliphatische Polyurethane eine geringere Vergilbungsneigung bei UV-Strahlung.

Selbstverständlich können im Rahmen der Erfindung auch alle anderen zur der Polyurethanherstellung geeigneten Harze oder Härter eingesetzt werden. Auch können natürlich die üblichen bekannten Hilfsmittel, wie Vernetzer oder Kettenverlängerer, z.B. Butandiol oder Glyzerin, eingesetzt werden. Weiterhin kann vorgesehen sein, dass die Polyurethan-Gießharzschicht durch z.B. Zusatz von UV-Absorbern UV-beständig ist.

Darüberhinaus ist es selbstverständlich auch möglich, der Gießharzschicht Farben, insbesondere photochrome Farben oder IR-Absorber etc. zuzusetzen.

Erfindungsgemäss weist die ausgehärtete Gießharzschicht eine Temperaturbeständigkeit auf, die oberhalb der Verformungstemperatur der Kunststoffscheiben liegt.

Der Begriff Temperaturbeständigkeit soll im Rahmen der Erfindung bedeuten, dass die Gießharzschicht während der Verformung des Verbunds keine die Funktion beeinträchtigenden Änderungen erfährt. Im Rahmen der Erfindung ist es durchaus möglich, dass die Giessharzschicht bei der Verformung gewisse Änderungen, z.B. eine schwache Gelbfärbung oder dergleichen erfährt. Solange diese Änderungen die Funktion der Schicht, bzw. des Scheibenverbunds nicht beeinträchtigen ist eine im Rahmen der Erfindung gemeinte Temperaturbeständigkeit gegeben.

Erfindungsgemäß wird die Kunststoff-Verbundscheibe mittels Wärmeverformung auf eine gewünschte Form bringen. Üblicherweise muss die erfindungsgemäße Verbundscheibe hierzu lediglich in eine, die gewünschte Form vorgebende Zwangsform eingespannt werden und kann dann, im Falle von Polycarbonat, z.B. bei einer Temperatur von 140°C, 3 Stunden lang, in einem Ofen verformt werden.

Es hat sich überraschenderweise gezeigt, dass durch Wärmeverformung hergestellte erfindungsgemässe gekrümmte, insbesondere bevorzugt transparente Kunststoff-Verbundscheiben durch die Verformung weder in ihren optischen, noch in ihren mechanischen Eigenschaften beeinträchtigt wurden.

Eine gewählte Temperaturbeständigkeit der Gießharzschicht in einem Bereich zwischen 110 C° und 180 C° stellt sicher, dass bei der Verformungstemperatur der Kunststoffscheiben keine Zersetzung, beziehungsweise Auflösung, der Gießharzschicht eintritt.

Bevorzugt wird die Shorehärte A der Gießharzschicht auf einen Wert zwischen 60 und 90 eingestellt, was in etwa den Werten bei der im Stand der Technik eingesetzten TPU-Folie entspricht. Schichten mit solchen Shorehärten können die üblichen bei Einsatz auftretenden linearen Dehnungen zwischen den Scheiben aufgrund ihrer Elastizität problemlos aufnehmen.

Hauptvorteil der erfindungsgemäß hergestellten Verbundscheibe ist, dass sie sich aufgrund ihres Aufbaus insgesamt mittels Wärmeverformung in eine gewünschte Form bringen lässt. Es versteht sich, dass die Wärmeverformung nicht beliebig möglich ist, sondern dass dabei, im Rahmen dieser Anmeldung, im Wesentlichen an Formen gedacht wird, die im Fahrzeugbau üblich sind.

Im Stand der Technik sind insbesondere Glas-Verbundscheiben bekannt, die über eine Gießharzschicht miteinander verbunden sind. In der Regel handelt es sich dabei nicht um geformte, sondern um plane Verbundscheiben. Weiterhin ist der verwendete Gießharz nicht mittels Additionspolymerisation aushärtbar, sondern UV-aushärtbar. Die Verwendung eines 2-Komponenten-Gießharzes wird in diesem Zusammenhang nicht angesprochen.

Wesentliches Merkmal der erfindungsgemäß hergestellten Verbundscheibe ist, dass die einzelnen Scheiben des Verbundes über die Gießharzschicht zusammengehalten werden. Eine vorteilhafte Ausgestaltung der Erfindung sieht in diesem Zusammenhang vor, dass die der Gießharzschicht zugewandten Seite mindestens einer der Kunststoffscheiben, sinnvollerweise die Seiten beider Scheiben, zur Erhöhung der Haftung vorbehandelt sind.

Im Rahmen der Erfindung können alle üblichen zur Oberflächenbehandlung geeigneten Verfahren zum Einsatz kommen. Denkbar sind z.B. chemische Verfahren, bei denen die Scheiben mit Laugen oder Säuren benetzt werden, abrasive Verfahren, bei denen die Oberfläche z.B. mittels Oxidation (Corona, H₂O₂) aufgerauht wird oder photolytische Verfahren mit z.B. UV-Strahlung.

In einer besonders vorteilhaften Ausgestaltung der Erfindung wird die Oberfläche der Seite der Kunststoffscheibe einer sogenannten Corona-Entladung unterzogen. Es handelt sich dabei um eine physikalisch-chemische Oberflächenbehandlung, bei der mittels eines elektrischen Feldes starke Entladungen erzeugt werden, die an der Oberfläche Moleküle spalten. Die entstehenden, freien Valenzen reagieren mit gasförmigen Produkten (Ozon, Stickoxide, atomarer Sauerstoff) der Corona-Entladung und es entsteht eine polare, gut benetzbare Oberfläche mit hoher Oberflächenspannung. Dem Fachmann ist das Prinzip der Corona-Entladung gut bekannt. Es wird daher an dieser Stelle nicht weiter darauf eingegangen.

Denkbar ist wie erwähnt in weiteren bevorzugten Ausgestaltungen, dass die entsprechenden Oberflächen der Kunststoffscheiben mit Ozon oder z.B. Basen, wie KOH, vorbehandelt werden, was wiederum zu einer verbesserten Benetzbarkeit und damit Verklebbarkeit führt.

In einer weiteren, vorteilhaften Ausgestaltung ist vorgesehen, dass die nach außen weisenden Seiten der Kunststoffscheiben in der Verbundscheibe mit Beschichtungen versehen sein können, die eine Erhöhung der Abriebfestigkeit und/oder UV- und Witterungsbeständigkeit gewährleisten. Insbesondere bei Verbundscheiben, deren äußere Scheibe aus Polycarbonat besteht, ist eine Beschichtung zur Erhöhung der Abriebfestigkeit in aller Regel erforderlich, da Polycarbonat aufgrund seiner weichen Oberfläche sehr empfindlich ist.

Die in der erfindungsgemäß hergestellten Verbundscheibe verbauten Kunststoffscheiben können grundsätzlich aus allen gängigen für Verbundscheiben geeigneten Kunststoffmaterialien wie z.B. Polyethylenterephthalat (PET), Polymethylmethacrylat (PMMA), Polyphenylsulfon (PPSU), Polycarbonat (PC) oder Polystyrol (PS) bestehen. Denkbar sind z.B. Verbundscheiben, deren Einzelscheiben aus PMMA bestehen. Denkbar sind selbstverständlich auch Kunststoff-Verbundscheiben, die aus unterschiedlichen Kunststoffscheiben aufgebaut sind, beziehungsweise solche Verbundscheiben, die mehr als zwei Scheiben aufweisen, wobei sich in dem Fall natürlich auch die Zahl der zur Verbindung dienenden Gießharzschichten entsprechend erhöht. Denkbar insbesondere in dem unten angsprochenen Sicherheitsbereich sind Verbünde, die aus einer äusseren PMMA Scheibe und mehreren PC-Scheiben mit jeweils dazwischen angeordneten Giessharzschichten bestehen.

Eine besonders vorteilhafte Ausgestaltung der Erfindung sieht vor, dass die Verbundscheibe aus Polycarbonat-Scheiben aufgebaut ist. Derartige Verbundscheiben sind insbesondere für den Sicherheitsbereich, z.B. bei Polizeifahrzeugen und dergleichen, als Panzerscheiben oder schusssichere Scheiben geeignet.

Erfindungsgemäß ist vorgesehen, dass zwei im Wesentlichen plane Kunststoffscheiben parallel und im Abstand so zueinander angeordnet werden, dass zwischen den Scheiben ein Zwischenraum zur Ausbildung der Gießharzschicht verbleibt.

Üblicherweise ist der Abstand zwischen den Kunststoffscheiben relativ gering im Bereich von circa 0,6mm-5mm. Denkbar sind natürlich auch anders dimensionierte Zwischenräume.

Der Zwischenraum zwischen den beiden Scheiben wird dann mit den beiden Komponenten eines 2-Komponenten-Polyurethangießharzes befüllt. In aller Regel werden die beiden Komponenten erst unmittelbar vor Befüllung miteinander homogen gemischt, wobei nach Kontakt der beiden Komponenten die gewünschte Polymerisation beginnt. Sobald die Polymerisation zu einer ausreichend ausgehärteten Gießharzschicht geführt hat, kann man die Kunststoff-Verbundscheibe durch Wärmeverformung in eine gewünschte Form bringen.

Denkbar - und im Rahmen der Erfindung vorteilhaft - ist auch der Einsatz sogenannter geblockter Isocyanate, die ab einer bestimmten Temperatur deblockiert werden und dann erst beginnen, zu reagieren. Auf diese Weise kann man zunächst den insbesondere bei großflächigen Scheiben relativ schwierig zu befüllenden Zwischenraum bei einer Temperatur unterhalb der Deblockierungstemperatur befüllen. So ist sichergestellt, dass nicht während des Befüllens die Polymerisation beginnt und gegebenenfalls den Befüllungsvorgang stört. Nachdem der Zwischenraum dann ausreichend gefüllt ist, kann die Temperatur erhöht werden und die Polymerisation startet.

Zum Einsatz kommen können im Rahmen der Erfindung alle geeigneten dem Fachmann geläufigen temperaturbeständigen, insbesondere transparenten oder translucenten 2 Komponenten Giessharzmischungen mit und ohne Blocker. Besonders geeignet sind Mischungen mit hohem Polyesteranteil, sowie bei Polycarbonatscheiben, Mischungen, die an Polycarbonat angepasst sind. Geeignet sind auch die zunehmend im Markt zu findenden Giessharze auf Basis nachwachsender Rohstoffe. Die gewünschten Ausgangsviskositäten, bzw. die in der ausgehärteten Giessharzschicht gewünschten mechanischen Werte lassen sich durch Wahl entsprechende Mischverhältnisse von Harz und Härter individuell einstellen und optimieren.

Geeignete Zweikomponenten-Giessharze sind z.B. bei der Firma Intercol bv. Unter der Bezeichnung PUR 480 (Harz) und PUR G (Härter) erhältlich. Die Mischung der Komponenten kann individuell eingestellt werden. Geeignet wäre z.B. ein Verhältnis 1:1.

Wie oben bereits ausgeführt, ist ein wesentliches Merkmal des erfindungsgemäßen Verfahrens, dass der Zwischenraum zwischen den Kunststoffscheiben mit dem Gießharz befüllt wird. Es versteht sich, dass im Hinblick auf die gewünschte Transparenz hierbei keine Schlieren oder Luftblasen entstehen dürfen. Dies kann durch sorgfältiges Entgasen und Mischen des Gießharzes erreicht werden. Allerdings ist der Zwischenraum in aller Regel so dimensioniert, dass bevorzugt Gießharze mit einer relativ geringen Viskosität eingefüllt werden können. Denkbar sind Viskositäten zwischen 100 bis 1000 mPas. Aber auch dann kann es, insbesondere bei großflächigen Scheiben, zu Problemen kommen. Zur Befüllung großflächiger Scheiben sieht daher eine weitere, vorteilhafte Ausgestaltung der Erfindung vor, dass eine Vakuum-Gießharz-Anlage verwendet wird.

Im Folgenden soll die Erfindung anhand eines Beispiels und mehrerer Figuren näher erläutert werden.
- Fig. 1: zeigt im Schnitt eine Verbundscheibe während der Befüllung mit Giessharz;
- Fig. 2: zeigt eine anders aufgebaute Verbundscheibe während der Befüllung;
- Fig. 3: zeigt eine Einrichtung, in der eine Verbundscheibe während der Befüllung und der Aushärtung aufgenommen sein kann.

### Beispiel: Herstellung einer Polycarbonat-Verbundscheibe

Zwei Polycarbonat-Scheiben (Dicke 4 mm; Fläche 1,80 m x 1,30m) erhältlich bei der Firma "Bayer Makrolon" wurden in einem ersten Schritt auf ihren jeweiligen Innenseiten zur Oberflächenaktivierung 10 Minuten mit 10%-iger KOH-Lösung benetzt.

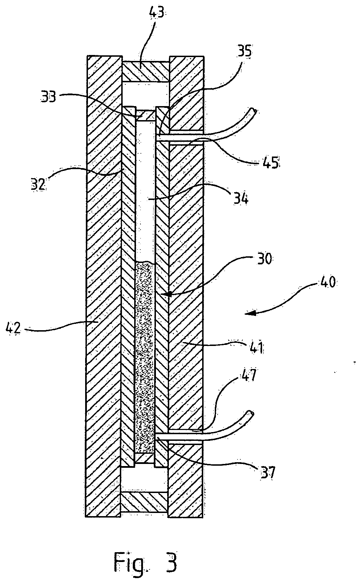

Anschließend wurden die beiden Scheiben mit ihren benetzten Seiten zueinander weisend bündig mit einem 1 mm starken und 19 mm breiten klebenden Abstandsband (3M/ 4910 F) im Randbereich miteinander verklebt. Die miteinander verklebten Scheiben wurden dann zwischen zwei flächige feste Stahlplatten angeordnet wie in Fig. 3 gezeigt, wobei die Platten in einem Winkel zwischen 0° und 90° verschwenkbar aufgenommen sind.

Nach Anordnung des Scheibenverbundes zwischen den Platten erfolgte die Befüllung mit einem Zweikomponentenharz.

Zur Befüllung wurden die Platten auf einen Neigungswinkel von etwa 5° eingestellt. Die unmittelbar vor der Befüllung miteinander homogen vermischten Komponenten des Gießharzes wurden dann durch eine in einem tieferen Bereich der Scheibe gelegene Befüllungsöffnung in den Zwischenraum eingefüllt. Nach Befüllung der Scheibe mit dem Gießharz wurden die Platten in die Senkrechte verschwenkt, um ein Aufsteigen und Austreten eventueller Luftblasen durch eine höher gelegene Entlüftungsöffnung zu ermöglichen und die Verbundscheibe wurde mehrere Stunden bei 90° C ausgehärtet.

Nach Aushärtung der Gießharzschicht wurde der Scheibenverbund dann zwischen zwei formgebende Stempel eingespannt und im Umluftofen für 3 Stunden bei 135° C behandelt. Nach Erkaltung wurde die Scheibe dann in einer Fräserei nachbearbeitet und konnte unmittelbar zum Beispiel als Frontscheibe eines Fahrzeuges verwendet werden.

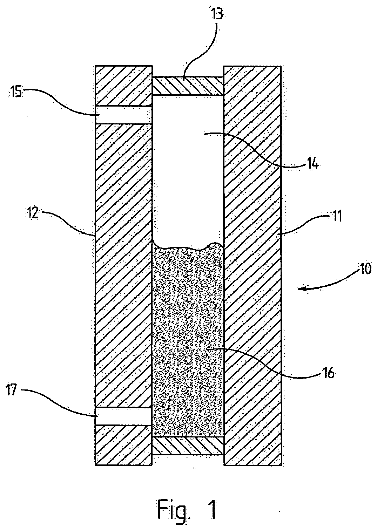

Fig 1 zeigt schematisch im Schnitt eine erfindungsgemäße Kunststoff-Verbundscheibe 10. Die Verbundscheibe ist aus 2 Kunststoffscheiben 11 und 12 aufgebaut. Denkbar ist, dass die Scheiben aus unterschiedlichen Materialien bestehen, z. B. die Scheibe 11 aus Polycarbonat und die Scheibe 12 aus dem beständigeren PMMA. Eine solche Verbundscheibe würde in ein Fahrzeug mit der Scheibe 11 nach innen und der Scheibe 12 nach aussen weisend eingebaut.

Bei Einsatz in Sicherheitsfahrzeugen ist allerdings auch denkbar, dass beide Scheiben 11 und 12 der Kunststoff-Verbundscheibe 10 aus Polycarbonat bestehen.

Am äußeren Rand ist zwischen den beiden Scheiben 11 und 12 umlaufend eine Dichtung 13 vorgesehen, die einen Zwischenraum 14 zwischen den Scheiben 11 und 12 abdichtet. Die Dichtung 13 wird später von der fertigen Verbundscheibe abgefräst.

In den Zwischenraum 14 wird im Rahmen der Herstellung der Verbundscheibe 10 durch z.B. eine Öffnung 17 in der Scheibe 12, wie oben ausgeführt, unter Druck ein Gießharz eingefüllt, das nach Aushärtung eine die beiden Scheiben 11 und 12 miteinander verbindende Gießharzschicht 16 ausbildet. Um das Befüllen des Zwischenraums 14 mit dem Gießharz zu erleichtern, kann in der Scheibe 12 eine weitere Öffnung 15 vorgesehen sein, über die an den Zwischenraum 14 ein Vakuum angelegt werden kann. Nach dem Befüllen werden beide Öffnungen 15 und 17 mit einem geeigneten nicht dargestellten Verschluss geschlossen.

Die dargestellte Kunststoff-Verbundscheibe 10 kann, eine entsprechende Wärmeverformbarkeit der Kunststoff-Scheiben 11 und 12 vorausgesetzt, mit einfachen Verfahren (wie in dem Beispiel angegeben), z. B. gekrümmt oder auf andere Weise verformt werden.

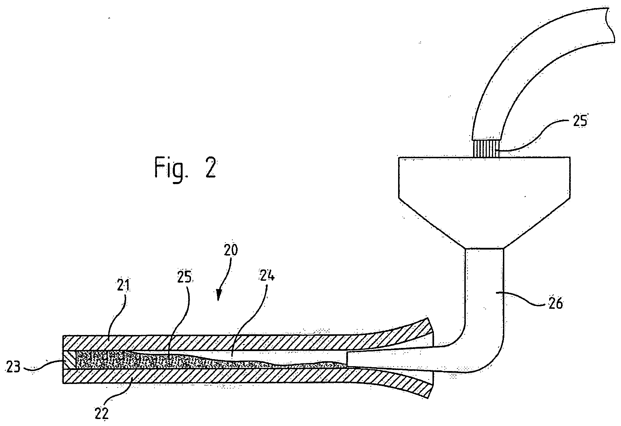

Fig. 2 zeigt wiederum eine erfindungsgemäße Kunstoffverbundscheibe 20. Die Scheibe 20 weist zwei Kunststoffscheiben 21 und 22 auf, die über eine umlaufende Dichtung 23 im Abstand zueinander angeordnet sind, dergestalt, dass zwischen den Scheiben 21 und 22 ein Zwischenraum 24 entsteht. Im Unterschied zu der in Fig. 1 gezeigten Scheibe weist die Verbundscheibe 20 keine speziellen Öffnungen zum Befüllen des Zwischenraumes 24 mit Gießharz 25 auf. Bei der in Fig. 2 gezeigten Variante wird die Scheibe in einem Bereich partiell auseinander gebogen und es kann dann über einen Trichter 26 das Gießharz 25 eingefüllt werden. Nach Befüllung der Scheibe wird der Trichter entfernt und die Scheibe 20 in zum Beispiel eine senkrechte Position zum Entlüften des Gießharzes und zur Aushärtung gebracht.

In aller Regel erreicht man eine bessere und homogenere Verteilung des Gießharzes in dem Zwischenraum, wenn während oder nach dem Befüllen von außen flächiger Druck auf die Verbundscheibe aufgebracht wird. Fig. 3 zeigt eine Einrichtung 40, mit der eine solche Druckbeaufschlagung einer Verbundscheibe 30 möglich ist.

Die Verbundscheibe 30 weist wiederum zwei Kunststoffscheiben 31 und 32 auf, die über eine Dichtung 33 auf Abstand gehalten sind, so dass ein Zwischenraum 34 zwischen beiden Scheiben entsteht. Zur Befüllung beziehungsweise Entlüftung sind Öffnungen 37 bzw 35 vorgesehen.

Die Verbundscheibe 30 ist nun ihrerseits in der Einrichtung 40 aufgenommen, die aus zwei Stahlplatten 41 und 42 besteht, die über einen Abstandshalter 43 auf einen Abstand zueinander eingestellt sind, der exakt der Dicke der Verbundscheibe 30 entspricht. Die Platte 41 weist mit den Öffnungen 35 und 37 fluchtende Öffnungen 45 und 47 auf, so dass eine Befüllung der Verbundplatte bei in die Vorrichtung 40 eingesetztem Zustand möglich ist. Mittels der Stahlplatten 41 und 42, die seitlich und flächig gegen die Verbundscheibe anpressen, wird eine besonders gleichmäßige und homogene Verteilung und Aushärtung der Gießharzschicht in dem Zwischenraum 34 möglich.

## Patentansprüche

1. Verfahren zur Herstellung einer gebogenen Kunststoff-Verbundscheibe für insbesondere die Fahrzeugverscheibung mit mindestens zwei über eine ausgehärtete Gießharzschicht flächig miteinander verbundenen Kunststoffscheiben, wobei die Gießharzschicht eine oberhalb der Verformungstemperatur der Kunststoffscheiben liegende Temperaturbeständigkeit aufweist, bei dem
zwei insbesondere plane Kunststoffscheiben (11, 12; 21, 22; 41, 42) parallel und im Abstand zueinander angeordnet werden, dergestalt dass zwischen den Scheiben ein Zwischenraum (14; 24; 34) zur Ausbildung der Gießharzschicht verbleibt,
der Zwischenraum (14; 24; 34) mit den beiden Komponenten eines 2 Komponenten Polyurethan-Gießharz befüllt wird,
man die beiden Komponenten zur Ausbildung einer die Kunststoffscheiben miteinander verbindenden Gießharzschicht polymerisieren lässt, **dadurch gekennzeichnet, dass** man nach Polymerisierung und Aushärtung der Gießharzschicht die Kunststoff-Verbundscheibe (10, 20, 40) durch Wärmeverformung in die gewünschte Form bringt.

2. Verfahren nach Anspruch 1, **dadurch gekennzeichnet, dass** die Befüllung des Zwischenraums mittels Injektion, insbesondere Vakuuminjektion erfolgt.

3. Verfahren nach Anspruch 1 oder 2, **dadurch gekennzeichnet, dass** das Gießharz eine Viskosität von 100-1000 mPas aufweist.

4. Verfahren nach Anspruch 1 oder 2, **dadurch gekennzeichnet, dass** die Gießharzschicht im ausgehärteten Zustand eine Shorehärte A zwischen 60 und 90 aufweist.

5. Verfahren nach Anspruch 1, **dadurch gekennzeichnet, dass** die Verbundscheibe nach Befüllung des Zwischenraums zur Beschleunigung der Polymerisation und des Vernetzungsgrades erwärmt wird.

6. Verfahren nach Anspruch 1, **dadurch gekennzeichnet, dass** eine Seite mindestens einer der Kunststoffscheiben zur Erhöhung der Haftung zwischen der Kunststoffscheibe und der Gießharzschicht vorbehandelt ist.

7. Verfahren nach Anspruch 6, **dadurch gekennzeichnet, dass** die Vorbehandlung eine chemische, abrasive oder photolytische Behandlung ist.

8. Verfahren nach Anspruch 7, **dadurch gekennzeichnet, dass** die Vorbehandlung eine Corona-Behandlung ist.

9. Verfahren nach Anspruch 7, **dadurch gekennzeichnet, dass** die Vorbehandlung eine Behandlung mit Ozon oder Säuren oder Basen ist.

10. Verfahren nach Anspruch 1, **dadurch gekennzeichnet, dass** die der Polyurethan-Gießharzschicht abgewandte Seite mindestens einer der Kunststoffscheiben (11, 12; 21, 22; 41, 42) mit einer Beschichtung zur Erhöhung der Abriebfestigkeit und/oder UV oder Witterungsbeständigkeit versehen wird.

11. Verfahren nach Anspruch 1, **dadurch gekennzeichnet, dass** beide Kunststoffscheiben (11, 12; 21, 22; 41, 42) aus Polycarbonat bestehen.

12. Verfahren nach Anspruch 1, **dadurch gekennzeichnet, dass** die Kunststoffverbundscheibe transparent ist.

## Claims

1. Method for the manufacture of a curved laminated plastic pane in particular for vehicle windows comprising at least two plastic panes, whose surfaces are connected to each other by means of a cured casting resin layer, whereby the casting resin layer has a temperature resistance that is above the deformation temperature of the plastic panes, in which
two, in particular planar, plastic panes (11, 12; 21, 22; 41, 42) are arranged parallel and at a distance with respect to each other such that a gap (14; 24; 34) for deformation of the casting resin layer remains between the panes;
two components of a 2-component polyurethane casting resin are filled in the gap (14; 24; 34);
the two components are allowed to polymerise in order to form a casting resin layer connecting the plastic panes to each other, **characterised in that** the laminated plastic pane (10, 20, 40) is made to have the desired shape by means of heat forming after the polymerisation and curing of the casting resin layer took place.

2. Method according to claim 1, **characterised in that** the gap is being filled by means of injection, in particular vacuum injection.

3. Method according to claim 1 or 2, **characterised in that** the casting resin comprises a viscosity of 100-1,000 mPas.

4. Method according to claim 1 or 2, **characterised in that** the casting resin layer, in cured condition, and has a Shore hardness A between 60 and 90.

5. Method according to claim 1, **characterised in that** the laminated pane is being heated after the gap is filled in order to accelerate the polymerisation and the degree of cross-linking.

6. Method according to claim 1, **characterised in that** one side of at least one of the plastic panes is pre-treated in order to increase the adhesion between the plastic pane and the casting resin layer.

7. Method according to claim 6, **characterised in that** the pre-treatment is a chemical, abrasive or photolytic treatment.

8. Method according to claim 7, **characterised in that** the pre-treatment is a Corona treatment.

9. Method according to claim 7, **characterised in that** the pre-treatment is a treatment with ozone or acids or bases.

10. Method according to claim 1, **characterised in that** the side of at least one of the plastic panes (11, 12; 21, 22; 41, 42) that faces away from the polyurethane casting resin layer is being provided with a coating in order to increase the abrasion resistance and/or UV or weather resistance.

11. Method according to claim 1, **characterised in that** both plastic panes (11, 12; 21, 22; 41, 42) consist of polycarbonate.

12. Method according to claim 1, **characterised in that** the laminated plastic pane is transparent.

## Revendications

1. Procédé de fabrication d'une vitre feuilletée incurvée en matière plastique, notamment pour le vitrage de véhicules, avec au moins deux vitres en matière plastique superficiellement jointes par une couche intermédiaire de résine de coulée durcie, la couche de résine de coulée ayant une résistance à chaud supérieure à la température de déformation des vitres en matière plastique, dans le cadre duquel deux vitres en matière plastique notamment planes (11, 12; 21, 22; 41, 42) sont agencées parallèlement et avec un certain espacement de sorte à réserver entre les vitres un espace intercalaire (14; 24; 34) pour la formation de la couche de résine de coulée, l'espace intercalaire (14; 24; 34) étant rempli avec les deux composants d'une résine de polyuréthane à 2 composants que l'on laisse polymériser pour former une couche de résine de coulée joignant les vitres en matière plastique, **caractérisé en ce que,** après la polymérisation et le durcissement de la couche de résine de coulée, on donne à la vitre feuilletée en matière plastique (10, 20, 40) la forme voulue par façonnage à chaud.

2. Procédé selon la revendication 1, **caractérisé en ce que** le remplissage de l'espace intercalaire a lieu par injection, notamment par injection sous vide.

3. Procédé selon la revendication 1 ou 2, **caractérisé en ce que** la résine de coulée présente une viscosité de 100-1000 mPa·s.

4. Procédé selon la revendication 1 ou 2, **caractérisé en ce que** la couche de résine de coulée présente, à l'état durci, une dureté Shore A comprise entre 60 et 90.

5. Procédé selon la revendication 1, **caractérisé en ce que,** après le remplissage de l'espace intercalaire, la vitre feuilletée est chauffée pour accélérer la polymérisation et le taux de réticulation.

6. Procédé selon la revendication 1, **caractérisé en ce qu'**une face au moins de l'une des vitres en matière plastique est prétraitée pour augmenter l'adhérence entre la vitre en matière plastique et la couche de résine de coulée.

7. Procédé selon la revendication 6, **caractérisé en ce que** le prétraitement est un traitement chimique, abrasif ou photolytique.

8. Procédé selon la revendication 7, **caractérisé en ce que** le prétraitement est un traitement corona.

9. Procédé selon la revendication 7, **caractérisé en ce que** le prétraitement est un traitement à l'ozone, aux acides ou aux bases.

10. Procédé selon la revendication 1, **caractérisé en ce que** la face opposée à la couche de résine de coulée au polyuréthane de l'une au moins des vitres en matière plastique (11, 12; 21, 22; 41, 42) est munie d'un revêtement augmentant la résistance à l'abrasion et/ou aux UV ou la stabilité aux intempéries.

11. Procédé selon la revendication 1, **caractérisé en ce que** les deux vitres en matière plastique (11, 12; 21, 22; 41, 42) sont composées de polycarbonate.

12. Procédé selon la revendication 1, **caractérisé en ce que** la vitre feuilletée en matière plastique est transparente.
